# EUROPÄISCHE PATENTANMELDUNG

(11) **EP 0 932 118 A1**
(43) Veröffentlichungstag der Anmeldung: **28.07.1999**
(21) Anmeldenummer: 99810066.3
(22) Anmeldetag: 27.01.1999
(51) Int. Cl.: G06K 11/18

(54) **Eingabegerät für einen Computer**

(30) Priorität: 27.01.1998 CH 19498
(71) Anmelder: Mendez-Waser, Carlos, 6373 Ennetbürgen (CH); Mendez-Waser, Irene, 6373 Ennetbürgen (CH)
(72) Erfinder: Mendez-Waser, Carlos, 6373 Ennetbürgen (CH); Mendez-Waser, Irene, 6373 Ennetbürgen (CH)
(74) Vertreter: Liebetanz, Michael, Dipl.-Phys.

(57) **Zusammenfassung**

Die Erfindung bezieht sich auf eine Computer-Maus insbesondere zum Steuern eines Cursors auf dem Bildschirm eines Computers und weist einen Grundkörper (2) auf, auf dessen Oberfläche (3) wenigstens eine Auslösetaste (4) vorgesehen ist. Die äussere Gestalt des Grundkörpers (2) der Computer-Maus (1) ist in Form eines Spielzeugs, insbesondere einer Comic-Figur, ausgebildet und an die Grösse von Kinderhänden angepasst.

## Beschreibung

Die Erfindung bezieht sich auf ein Eingabegerät für einen Computer nach dem Oberbegriff des Patentanspruchs 1, insbesondere auf eine Computermaus.

Computer-Mäuse dienen in aller Regel zur Eingabe von Positions- und Auslöseinformationen und weisen dazu in ihrem Grundkörper einen Positionssensor auf. Dieser Positionssensor hat eine Rollkugel, welche im angehobenen Zustand der Computer-Maus teilweise aus einer Öffnung in der Bodenfläche des Grundkörpers hervortritt. Durch die Bewegung der Maus auf einer ebenen Fläche neben dem Bildschirm, wie zum Beispiel einer Tischoberfläche oder einer Spezialunterlage, rollt die Kugel und erzeugt dadurch im Verhältnis zu ihrer Bewegung ein Hin- und Herverschieben eines Cursors auf dem Bildschirm eines Computers. Üblicherweise ist eine solche Maus auf ihrer Oberseite mit mehreren Auslösetasten versehen. Durch ein Drücken einer oder mehrerer Auslösetasten ist es möglich, die Position des Cursors auf dem Bildschirm zu verändern bzw. mit Hilfe der Position des Cursors Befehle auf dem Bildschirm auszuführen bzw. in den Computer einzugeben.

Eine Computer-Maus der eingangs erwähnten Art ist aus der Praxis oder auch aus der DE-C1-195 31 066 bekannt. Die in herkömmlicher Weise ausgestalteten Computer-Mäuse sind für Kinderhände zu gross und für Kinder nicht ansprechend gestaltet.

Ausgehend von diesem Stand der Technik liegt der Erfindung die Aufgabe zugrunde, ein Eingabegerät für einen Computer der eingangs erwähnten Art zu schaffen, die für Kinder geeigneter ist.

Diese Aufgabe wird erfindungsgemäss durch ein Eingabegerät mit den Merkmalen des Patentanspruchs 1 gelöst.

Dadurch, dass ein ausgehender Anschluss der Auslösetaste mit einem in dem Eingabegerät integrierten Lautsprecher beschaltet ist, erfährt der Benutzer sofort eine gerichtete akustische Rückmeldung vom eingesetzten Gerät selber. Dies ist insbesondere für Kinder wertvoll, die die funktionelle Beziehung zur Computermaus erst erlernen müssen.

Gemäss einer anderen Ausführungsform der Erfindung ist die wenigstens eine Auslösetaste mit Licht- und/oder Klangeffekten ausgestaltet. Dadurch ist es möglich, eine beispielsweise als Mund einer Figur ausgestaltete Auslösetaste im Sinne einer Doppelwirkung noch ein Sprechvermögen oder einem als Auslösetaste ausgestalteten Auge einer Spielfigur die zusätzliche Funktion eines Leuchteffektes zuzuordnen.

Vorteilhafter ist dabei weiterhin zum einen, dass die Grösse der erfindungsgemässen Maus an Kinderhände angepasst ist, und zum zweiten, dass die äussere Gestalt des Grundkörpers der Maus in spezieller, Kinder ansprechender Weise gestaltet ist. Schon die Form der erfindungsgemässen Maus regt die Phantasie der Kinder an und erhöht dadurch die Bereitschaft der Kinder, mit dem Computer umzugehen. Ausserdem erhöht die besondere Gestalt der erfindungsgemässen Maus vor allem beim Einsatz von Computerspielen den Spielspass. Es ist ohne weiteres möglich, die Computer-Maus an die Gestalt einer Figur aus dem betreffenden Computerspiel anzupassen, so dass insbesondere bei Verwendung mehrerer Mäuse jedes Kind seine Lieblingsfigur auswählen und mit dieser das Spiel durchführen kann.

Gemäss einer Weiterbehandlung der Erfindung hat die äussere Gestalt des Grundkörpers die Form einer Comic-Figur. Derartige Figuren haben bei Kindern einen hohen Wiedererkennungswert und sind deshalb bei ihnen sehr beliebt.

Vorteilhafterweise bildet die wenigstens eine Auslösetaste eines der Körperteile des Spielzeugs, vorzugsweise das Ohr, das Auge, die Nase oder den Mund der Comic-Figur. Eine Betätigung der Körperteile des Spielzeugs bzw. der Comic-Figur ist für Kinder besonders lustig und "verlebendigt" die speziell ausgestaltete Computer-Maus. Der Spielspass wird dadurch noch erhöht.

Gemäss einer anderen Weiterbildung der Erfindung sind die Augen der Comic-Figur als Leuchtanzeige ausgebildet. Dies kann beispielsweise einer Hexe oder einem Zauberer ein furchterregendes oder einer Witzfigur ein lustiges Aussehen verleihen. Der Ausdruck der Augen der Comic-Figur kann also durch derartige Leuchtanzeigen verstärkt und unterstrichen werden.

Nachstehend werden Ausführungsbeispiele des Erfindungsgegenstandes an Hand der beigefügten Zeichnungen näher erläutert. Es zeigen:
- Fig. 1: eine schematische, perspektivische Darstellung eines Eingabegerätes in Gestalt einer Computer-Maus gemäss einem Ausführungsbeispiel der Erfindung;
- Fig. 2: eine schematische, perspektivische Darstellung der Computer-Maus gemäss einem weiteren Ausführungsbeispiel;
- Fig. 3: eine schematische, perspektivische Darstellung der Computer-Maus gemäss einem weiteren Ausführungsbeispiel;
- Fig. 4: eine schematische, perspektivische Darstellung der Computer-Maus gemäss einem weiteren Ausführungsbeispiel; und
- Fig. 5: ein Blockschaltbild der Beschaltung eines Eingabegerätes, beispielsweise gemäss einem Ausführungsbeispiel nach einer der Fig. 1 bis 4.

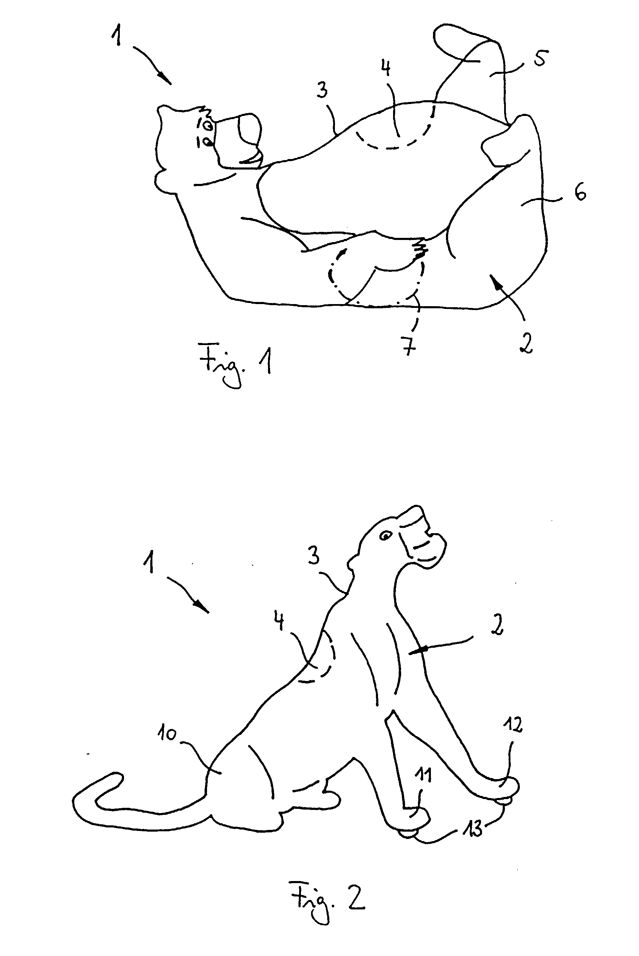

Eine erfindungsgemässe Computer-Maus 1, welche insbesondere zum Steuern eines nicht dargestellten Cursors auf einem ebenfalls nicht gezeigten Bildschirm eines Computers dient, ist in einer ersten Ausführungsform schematisch in Fig. 1 dargestellt.

Die Computer-Maus 1 hat einen Grundkörper 2, auf dessen Oberfläche 3 eine Auslösetaste 4 vorgesehen ist.

In dem hier dargestellten ersten Ausführungsbeispiel ist die äussere Gestalt des Grundkörpers 2 in Form eines teilweise auf dem Rücken liegenden Bären ausgebildet. Der gesamte, sich nach oben hin vorwölbende Bauch des Bären ist als Auslösetaste 4 ausgestaltet. Es ist natürlich auch möglich, lediglich einen Teil des Bauches als Auslösetaste auszugestalten, wie dies in Fig. 1 gestrichelt angedeutet ist.

Die Grösse der Computer-Maus ist erfindungsgemäss an die Grösse von Kinderhänden angepasst, insbesondere ist der Abstand zwischen den nach oben ragenden Beinen 5 und 6 des Bären so gewählt, dass die Hand und das Handgelenk des Kindes unproblematisch zwischen den Beinen ruhen kann.

Die auf einer nicht gezeigten, ebenen Fläche aufliegende Unterseite des Bären ist abgeflacht und beinhaltet, wie schematisch strichpunktiert bei 7 angedeutet, eine Rollkugel. Das Innere der erfindungsgemässen Computer-Maus 1 ist in herkömmlicher Weise ausgestaltet, so dass es möglich ist, durch ein Verschieben des Bären die Rollkugel 7 auf der nicht dargestellten ebenen Fläche abrollen zu lassen und dadurch einen Cursor auf einem nicht dargestellten Bildschirm eines Computers zu verschieben. Wenn sich der Cursor an der gewünschten Stelle des Bildschirms befindet, kann die Auslösetaste 4 betätigt werden, um bestimmte Befehle in den Computer einzugeben.

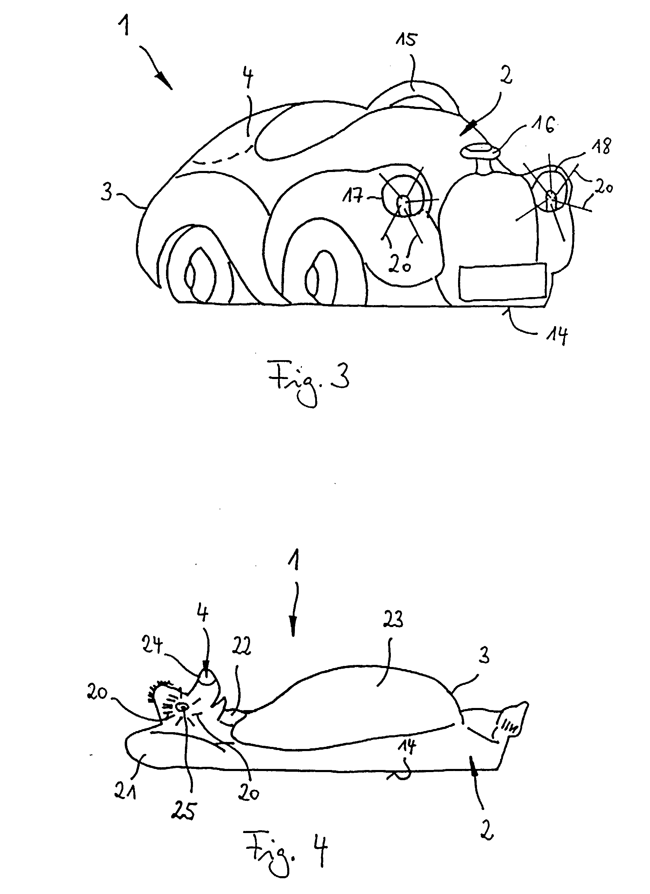

Gemäss der in Fig. 2 dargestellten zweiten Ausführungsform der Erfindung ist die äussere Gestalt des Grundkörpers 2 der Computer-Maus 1 in Form eines sitzenden Tigers ausgebildet. In diesem Fall befindet sich die nicht näher gezeigte Rollkugel im Hinterteil 10 dieser Figur.

Um ein Verschieben dieser Computer-Maus zu erleichtern, befinden sich an der Unterseite der Vorderpfoten 11 und 12 dieser Figur Kugeln oder Rollen 13. In diesem Fall ist ein Teil des Rückens der Figur als Auslösetaste 4 ausgestaltet.

Erfindungsgemäss ist die äussere Gestalt des Grundkörpers 2 der Computer-Maus in Form eines Spielzeugs, in den Ausführungsbeispielen gemäss der Fig. 1 und 2 in Bären- oder Tigerform, ausgestaltet.

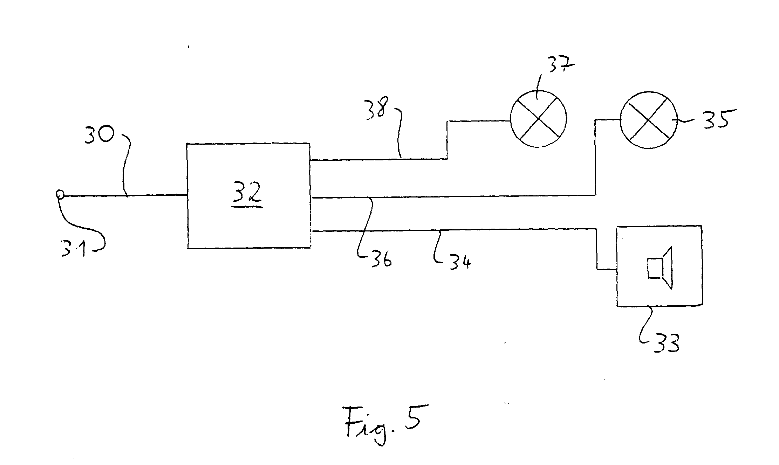

In Fig. 3 ist eine dritte Ausführungsform der erfindungsgemässen Computer-Maus 1 in Form eines Autos gezeigt.

Ähnlich wie im Ausführungsbeispiel der Fig. 1 ist der Boden 14 des Grundkörpers 2 abgeflacht und dadurch leicht auf einer ebenen Fläche verschiebbar. Die Auslösetaste 4 ist in diesem Fall als Teil des Fahrzeughecks ausgestaltet. Es ist aber ebensogut möglich, das Lenkrad 15 oder den Kühlerverschluss 16 als Auslösetaste auszubilden. Ausserdem ist es möglich, hinter dem Lenkrad 15 eine als Auslösetaste fungierende Figur anzuordnen. Es ist klar, dass die Grösse auch dieser Computer-Maus 1 an die Grösse von Kinderhänden angepasst ist.

Gemäss der in Fig. 3 gezeigten Ausführungsform sind die Scheinwerfer 17 und 18 des Autos als Leuchtanzeige ausgebildet, wie dies bei 20 angedeutet ist.

Ein viertes Ausführungsbeispiel der Erfindung ist in Fig. 4 in Form einer auf dem Rücken liegenden Spielfigur mit hinter dem Kopf verschränkten Armen 21, 22 dargestellt.

Ähnlich wie im Fall des in Fig. 1 dargestellten Bären wölbt sich der Bauch 23 dieser Figur stark nach oben, wobei Form und Grösse des Bauches an Kinderhände angepasst sind. In diesem Fall ist die Nase 24 der Spielfigur als Auslösetaste 4 ausgebildet. Sofern die erfindungsgemässe Computer-Maus 1 mehr als eine Auslösetaste aufweisen soll, ist es auch möglich, beispielsweise die in Fig. 4 gezeigten Arme 21 und 22 der Figur, zumindest aber deren Oberseiten, als weitere Auslösetasten auszubilden. An Stelle oder zusätzlich zu der Nase 24 könnte auch der nach oben gewölbte Bauch 23 als Auslösetaste dienen.

Wie gezeigt, ist auch der Boden 14 der in Fig. 4 gezeigten Figur abgeflacht.

Ähnlich wie im Fall der in Fig. 3 gezeigten Computer-Maus 1 ist es auch bei der in Fig. 4 dargestellten Figur möglich, eine Leuchtanzeige 20 vorzusehen. In dem in Fig. 4 gezeigten Ausführungsbeispiel sind die Augen 25 der Figur in entsprechender Weise ausgestaltet.

Die Erfindung ist nicht auf die dargestellten Ausführungsbeispiele beschränkt. Wichtig ist lediglich, dass die äussere Gestalt des Grundkörpers 2 in Form eines Spielzeugs ausgebildet und an die Grösse von Kinderhänden angepasst ist. Die Form des gewählten Spielzeugs kann jede beliebige Gestalt haben. So kann das Spielzeug eine Comic-Figur oder eine Tierfigur oder jede von Kindern geschätzte Form annehmen. Die Auslösetaste ist als Teil der Figur, insbesondere als Körperteil einer Tierfigur, ausgebildet. Die Auslösetaste 4 kann auch als Ohr, Auge oder Mund der Figur ausgebildet sein. Ferner ist es gemäss einer anderen, nicht gezeigten Ausführungsform möglich, die Auslösetaste zusätzlich mit Licht- und/oder Klangeffekten auszugestalten, um die Phantasie der die erfindungsgemässe Computer-Maus bedienenden Kinder weiter anzuregen.

Es ist klar, dass die zuvor beschriebene Auslösetaste 4 vorzugsweise eine Drucktaste ist. Die zuvor beschriebenen Licht- und/oder Klangeffekte können zusätzlich auch unabhängig von der Auslösetaste an dem jeweiligen, als Computer-Maus ausgestalteten Spielzeug vorgesehen sein.

Die Fig. 5 zeigt ein Blockschaltbild der Beschaltung eines Eingabegerätes, beispielsweise gemäss einem Ausführungsbeispiel nach einer der Fig. 1 bis 4. Das Eingabegerät, beispielsweise eine Computermaus verfügt über ein Anschlusskabel 30, welches mit einem Anschlussstecker 31 an einem Computer anschliessbar ist. Mit dem Bezugszeichen 32 ist die Einheit der Auslösetaste bezeichnet, die eine Drucktaste und einige elektronische Schalt- und Verstärkereinheiten umfasst. Vorteilhafterweise ist der mechanische Schaltkontakt bei nicht betätigtem Schalter geschlossen, wobei ein Ausgangssignal durch einen invertierenden Verstärker hergestellt wird.

Bei Betätigung des Schalters der Auslöseeinheit 32 wird der Lautsprecher 33 über eine Leitung 34 für die Zeitdauer der Betätigung der besagten Drucktaste ausgelöst. Anstelle dessen kann auch eine vorbestimmte Lautfolge innerhalb der Auslöseeinheit 32 erstellt und über den Lautsprecher 33 ausgegeben werden, die zeitlich auch über das Ende der Betätigung der Auslöseeinheit 32 hinausgehen kann.

Bei einem hier dargestellten vorteilhaften Ausführungsbeispiel wird über die Betätigung des Schalters der Auslöseeinheit 32 auch eine Leuchtanzeige 35 ausgelöst, die mit einer Leitung 36 mit der Auslöseeinheit 32 verbunden ist. Die Leuchtanzeige 35, vorzugsweise eine oder mehrere LED, die auch unterschiedlich farbig sein können, kann kontinuierlich, beispielsweise für die Zeitdauer der Betätigung, oder in einem Rhythmus mit dem Geräusch des Lautsprechers 33 leuchten.

Zusätzlich können an der Eingabeeinheit auch kontinuierlich unabhängig von der Betätigung der Auslöseeinheit 32 leuchtende Leuchtanzeigen 37 vorgesehen sein, die über eine Leitung 38 an der Auslöseeinheit 32 angeschlossen sind. Diese Leuchtanzeige kann, gesteuert über die Leitung 30, für die Zeit angeschaltet sein, die der Computer angeschaltet ist.

Obwohl die Stromversorgung für die Leuchtanzeigen 35 und 37 sowie für den Lautsprecher 33 und deren Ansteuerung durch eine in der Eingabeeinheit integrierte Batterie oder Akkumulator erreicht werden kann, wird vorzugsweise der über die Leitung 30, zumeist ein serielles Kabel, gelieferte Strom genutzt.

Das Eingabegerät ist zumeist als sogenannte Computer-Maus an Computereinheiten anschliessbar.

Durch die Verbindung von Geräuschen und Licht ist eine Eingabehilfe geschaffen, die neben dem Anreiz für Kinder auch Behinderten eine Hilfe geben kann, da für Schwerhörige oder Taube ein Lichtsignal das Betätigen signalisiert und für Sehbehinderte das Geräuschsignal den Einsatz des Eingabegerätes bestätigt.

## Patentansprüche

1. Eingabegerät für einen Computer, insbesondere zum Steuern eines Cursors auf dem Bildschirm eines Computers, mit einem wenigstens eine Auslösetaste (4, 32) auf seiner Oberfläche (3) aufweisenden Grundkörper (2), **dadurch gekennzeichnet**, dass ein ausgehender Anschluss (34) wenigstens einer Auslösetaste (4, 32) mit einem in dem Eingabegerät integrierten Lautsprecher (33) beschaltet ist, so dass bei Betätigen dieser Auslösetaste (4, 32) ein Geräusch erzeugbar ist.

2. Eingabegerät nach Anspruch 1, dadurch gekennzeichnet, dass ein ausgehender Anschluss (36) wenigstens einer Auslösetaste (4, 32) mit einer in dem Eingabegerät integrierten Leuchtanzeige (35) beschaltet ist, so dass bei Betätigen dieser Auslösetaste (4, 32) ein Lichteffekt erzeugbar ist.

3. Eingabegerät nach Anspruch 2, dadurch gekennzeichnet, dass die besagte Leuchtanzeige (35) mit der Auslösetaste (4, 32) integriert oder in unmittelbarer Nähe zu dieser angeordnet ist.

4. Eingabegerät nach einem der vorstehenden Ansprüche, dadurch gekennzeichnet, dass die äussere Gestalt des Grundkörpers (2) in Form eines Spielzeugs ausgebildet und an die Grösse von Kinderhänden angepasst ist.

5. Eingabegerät nach Anspruch 4, dadurch gekennzeichnet, dass die äussere Gestalt des Grundkörpers (2) die Form einer Comic-Figur hat.

6. Eingabegerät nach einem der Ansprüche 4 oder 5, dadurch gekennzeichnet, dass die wenigstens eine Auslösetaste (4) eines der Körperteile des Spielzeugs bildet.

7. Eingabegerät nach Anspruch 5 und nach Anspruch 6, dadurch gekennzeichnet, dass die wenigstens eine Auslösetaste (4) als Ohr, Auge, Nase oder Mund der Comic-Figur ausgebildet ist.

8. Eingabegerät nach Anspruch 3 und nach Anspruch 5, dadurch gekennzeichnet, dass die Augen der Comic-Figur als Leuchtanzeige (35, 37) ausgebildet sind.

9. Eingabegerät nach einem der vorstehenden Ansprüche, dadurch gekennzeichnet, dass die Spannungsversorgung des Eingabegerätes durch die für die Verbindung mit einem Computer vorgesehene Steuerverbindung (30) vorgenommen wird.
